# EUROPÄISCHE PATENTSCHRIFT

(11) **EP 3 036 061 B1**
(45) Veröffentlichungstag und Bekanntmachung des Hinweises auf die Patenterteilung: **04.10.2017**
(21) Anmeldenummer: 14724646.6
(22) Anmeldetag: 15.05.2014
(51) Int. Cl.: B23K 26/00, B23K 26/06, B23K 26/18, B23K 26/36, B23K 26/40, C03B 33/00

(54) **VERFAHREN ZUR LASERBEARBEITUNG EINES WERKSTÜCKS MIT POLIERTER OBERFLÄCHE UND VERWENDUNG DIESES VERFAHRENS**
METHOD FOR THE LASER MACHINING OF A WORKPIECE HAVING A POLISHED SURFACE AND USE OF SAID METHOD
PROCÉDÉ DE TRAITEMENT AU LASER D'UNE PIÈCE PRÉSENTANT UNE SURFACE POLIE, ET UTILISATION DE CE PROCÉDÉ

(30) Priorität: 22.08.2013 DE 102013014069
(43) Veröffentlichungstag der Anmeldung: 29.06.2016
(73) Patentinhaber: Fraunhofer-Gesellschaft zur Förderung der angewandten Forschung e.V., 80686 München (DE)
(72) Erfinder: ESSER, Dominik, 52070 Aachen (DE); WEITENBERG, Johannes, 52070 Aachen (DE); HOFFMANN, Hans-Dieter, 52152 Simmerath (DE); ZIMMERMANN, Peter, 07743 Jena (DE)
(74) Vertreter: Gagel, Roland
(86) Internationale Anmeldenummer: PCT/EP2014/001317
(87) Internationale Veröffentlichungsnummer: WO 2015/024608

(56) Entgegenhaltungen:
- DE-A1- 10 029 110
- JP-A- 2011 168 422
- DATABASE WPI Week 199905 Thomson Scientific, London, GB; AN 1999-053704 XP002730375, -& JP H10 305374 A (NIPPON SHEET GLASS CO LTD) 17. November 1998 (1998-11-17)

## Beschreibung

### Technisches Anwendungsgebiet

Die vorliegende Erfindung betrifft ein Verfahren zur Laserbearbeitung eines Werkstücks aus einem dielektrischen Material, das mindestens eine polierte Oberfläche aufweist, bei dem das Material mit einem Laserstrahl zumindest an der polierten Oberfläche lokal beeinflusst wird, um einen Materialabtrag oder eine physikalische oder chemische Modifikation des Materials zu erreichen, sowie eine Verwendung dieses Verfahrens.

An einer polierten Oberfläche eines dielektrischen Materials funktioniert der Materialabtrag bedingt durch Reflexions- und Interferenzeffekte anders als an nicht polierten Oberflächen. Weiterhin weisen polierte Oberflächen ein anderes Bruchverhalten auf als raue Oberflächen. Als Folge der Laserbearbeitung können hier Muschelausbrüche auftreten, wenn diese Oberfläche Teil des bearbeiteten Volumens ist. Diese Muschelausbrüche sind gerade bei in optischer Qualität polierten Oberflächen problematisch, da sie die optische Qualität im Bereich um die Bearbeitungsstelle beeinträchtigen. So kann mit der Laserbearbeitung bspw. eine Bohrung in einem Spiegelsubstrat für Laseranwendungen erzeugt werden, um durch die Bohrung eine räumliche Trennung zweier oder mehrerer Strahlanteile zu erreichen. Bei der Trennung geometrisch naher oder gar überlagerter Strahlanteile sind Muschelausbrüche an den Kanten der Bohrung nachteilig, da sie eine verlorene Fläche darstellen, die für mindestens einen der Strahlanteile verlustbehaftet ist.

### Stand der Technik

Aus der DE 100 29 110 A1 (Basis für den Oberbegriff des Anspruchs 1) ist ein Verfahren zur Laserbearbeitung eines Werkstücks aus einem dielektrischen Material bekannt, bei dem das Material mit einem Laserstrahl lokal beeinflusst wird, um einen gezielten Materialabtrag zu erreichen. Bei dem Verfahren wird der Laserstrahl zunächst durch das Werkstück hindurch auf die Werkstückunterseite fokussiert, um an dieser Stelle mit dem Materialabtrag zu beginnen. Durch stufenweise Verlagerung des Fokus von der Unterseite des Werkstücks zur Werkstückoberseite wird eine durchgängige Bohrung im Werkstück erzeugt. Durch diese auch als inverse Laserbearbeitung oder inverses Laserbohren bezeichnete Technik wird verhindert, dass das abgetragene Material in den Strahlengang des Laserstrahls gelangt und die Bearbeitung damit behindert. Die Intensität der Laserstrahlung wird bei dieser Technik so gewählt, dass der Materialabtrag nur im Bereich des Fokus des Laserstrahls stattfindet. Zur Vermeidung einer Verminderung der Strahlqualität beim Eintritt in das Werkstück wird vorgeschlagen, die Oberseite des Werkstücks zu polieren oder mit einem transparenten Medium formschlüssig abzudecken, bspw. mit einer Schicht einer Lackierung, eines Klebers oder einer mit einem Spinoff-Verfahren hergestellten Schicht. Die Druckschrift befasst sich jedoch nicht mit dem Problem von Muschelausbrüchen an der polierten Oberfläche.

Grundsätzlich ist bei der Bearbeitung eines Werkstücks zwischen der Laserbearbeitung mit Ultrakurzpulslasern und der Laserbearbeitung mit gepulster Laserstrahlung einer Pulsdauer von ≥ ca. 100 ps zu unterscheiden. Ultrakurzpulslaser ermöglichen die Bearbeitung dielektrischer Materialien mit nur sehr geringen Muschelausbrüchen. Allerdings unterliegt die Bearbeitung mit Ultrakurzpulslasern stärkeren geometrischen Limitierungen. Zum Abtrag sind höhere Pulsspitzenintensitäten erforderlich als bei der Bearbeitung mit größeren Pulsdauern. Dies erfordert entweder eine große Pulsspitzenleistung oder einen kleinen Bearbeitungsfleck. Beim oben dargestellten inversen Laserbohren ist die Propagation des Laserstrahls durch das zu bearbeitende Werkstück zu berücksichtigen. Hier treten bei großen Pulsspitzenleistungen nichtlineare Effekte auf, die sich in einer Filamentierung des Laserstrahls und Selbstfokussierung niederschlagen. Die inverse Laserbearbeitung wird deshalb oberhalb einer kritischen Pulsspitzenleistung stark erschwert bis nahezu unmöglich. Die kritische Leistung für Selbstfokussierung beträgt bspw. für Quarzglas ca. 5 MW. Bei kleinerer Pulsspitzenleistung kommen die nichtlinearen Effekte nicht zu Tragen. Um die notwendige Bearbeitungsfluenz zu erreichen kann die Größe des Bearbeitungsflecks verringert werden. Dazu muss jedoch die numerische Apertur des Laserstrahls vergrößert werden. Dadurch wird wiederum die Bearbeitungstiefe beim inversen Laserbohren limitiert. Auch beim direkten Abtrag ist die Geometrie des abgetragenen Volumens durch die numerische Apertur des Laserstrahls begrenzt.

Bei der Bearbeitung mit Pulsdauern größer ca. 100 ps kommen die Limitierungen durch nichtlineare Effekte nicht zum Tragen. Daher sind größere Aspektverhältnisse des abgetragenen Volumens möglich. Die Limitierung wird hier alleine durch das Strahlparameterprodukt vorgegeben. Mit diesen Pulsdauern ist es bisher allerdings nicht gelungen, Muschelausbrüche an den bearbeiteten Kanten an polierten Oberflächen zu vermeiden.

Derartige Muschelausbrüche können zwar mit anderen Bearbeitungstechniken, bspw. mit Ultraschallbohren, klassischem Bohren oder Ätzverfahren minimiert oder vermieden werden. Diese Methoden weisen aber wiederum Nachteile gegenüber einer reinen Laserbearbeitung auf. So ist beim klassischen Bohren und beim Ultraschallbohren das maximale Aspektverhältnis der abgetragenen Geometrie um Größenordnungen geringer als bei der Laserbearbeitung. Bei den Ätzverfahren hängt die realisierbare dreidimensionale Geometrie von der Technik ab, mit der das wegzuätzende Volumen selektiert wird. So werden bspw. beim ISLE-Verfahren (ISLE: Involume Selective Laser Etching) Fokusdurchmesser der Laserstrahlung im Bereich von 0,6 bis 2,2 µm benötigt. Die dadurch für Wellenlängen um 1 µm erforderliche numerische Apertur von ca. 0,3 bis ca. 1,1 erzwingt einen entsprechend kurzen Arbeitsabstand, der die Ausdehnung der abzutragenden Geometrie stark begrenzt. Weiterhin bleibt beim Ätzvorgang die Oberfläche des Werkstücks nicht unbeeinflusst, und die Bearbeitungskanten verrunden im Allgemeinen so stark, dass von der Oberfläche reflektierte Laserstrahlung einer Wellenlänge λ mit einem Phasenfehler > π/2 beaufschlagt wird, d.h., dass dann die Abweichung von der idealen Wellenfront mehr als 1/4 der Wellenlänge des Laserstrahls beträgt. Dies führt wiederum zu unerwünschten Effekten bei Werkstücken, die für Laseranwendungen vorgesehen sind.

Die JP 61283486 A beschreibt ein Verfahren zur Laserbearbeitung eines Werkstücks, bei dem mit dem Laserstrahl lokal Material von der Oberfläche des Werkstücks abgetragen wird, um eine Bohrung im Werkstück zu erzeugen. Bei dem Verfahren wird vor der Bearbeitung die dem einfallenden Laserstrahl zugewandte Seite des Werkstücks mit einer Oberfläche eines Glassubstrates verbunden, das für den Laserstrahl transparent ist.

Die Aufgabe der vorliegenden Erfindung besteht darin, ein Verfahren zur Laserbearbeitung eines dielektrischen Werkstücks mit einer polierten Oberfläche sowie eine Verwendung dieses Verfahrens anzugeben, das die obigen Nachteile vermeidet, insbesondere eine Materialabtragung mit ausreichend großem Aspektverhältnis bei großer Freiheit in der Wahl der abzutragenden Geometrie ermöglicht, ohne Muschelausbrüche oder eine andere Beeinträchtigung der polierten Oberfläche zu verursachen.

### Darstellung der Erfindung

Die Aufgabe wird mit dem Verfahren gemäß Patentanspruch 1 und der Verwendung gemäß Patentanspruch 10 gelöst. Vorteilhafte Ausgestaltungen des Verfahrens sind Gegenstand der abhängigen Patentansprüche oder lassen sich der nachfolgenden Beschreibung sowie dem Ausführungsbeispiel entnehmen.

Bei dem vorgeschlagenen Verfahren zur Laserbearbeitung eines Werkstücks aus einem dielektrischen Material, das mindestens eine polierte Oberfläche aufweist, wird das Material in bekannter Weise mit einem Laserstrahl zumindest an der polierten Oberfläche lokal beeinflusst, um einen Materialabtrag oder eine beabsichtigte physikalische oder chemische lokale Modifikation des Materials zu erreichen. Das Verfahren zeichnet sich dadurch aus, dass die mindestens eine polierte Oberfläche vor der Beaufschlagung mit dem Laserstrahl mit einer polierten Substratfläche eines Hilfssubstrates verbunden wird, das für die Laserstrahlung zumindest teilweise transparent ist und nach der Bearbeitung wieder vom Werkstück abgelöst wird.

Durch diese Verbindung der polierten Oberfläche mit der polierten Substratfläche eines Hilfssubstrates werden die unerwünschten Muschelausbrüche bei der Laserbearbeitung vor allem mit längeren Pulsdauern verhindert. Somit wird nach dem Ablösen des Hilfssubstrates ein Werkstück mit einer lokal bearbeiteten polierten Oberfläche erhalten, das im Bereich um die Bearbeitungsstelle keine Beeinträchtigung der polierten Oberfläche aufweist. Dies ist insbesondere bei in optischer Qualität polierten Oberflächen von Vorteil, die für Laseranwendungen eingesetzt werden sollen. In diesem Fall wird die polierte Substratfläche des Hilfssubstrates ebenfalls mit optischer Qualität bereitgestellt. Unter einer optisch polierten Oberfläche bzw. einer polierten Oberfläche in optischer Qualität wird hierbei eine Oberfläche verstanden, die keine nennenswerten Phasenfehler zur Wellenfront des Lichtbündels oder Laserstrahls bei Reflektion von oder Transmission durch das Substrat bzw. der Oberfläche addiert. Insbesondere erfährt ein Laserstrahl beim Durchtritt durch eine Oberfläche in optischer Qualität oder bei Reflexion an dieser Oberfläche einen maximalen Phasenfehler, der kleiner als π/2 ist, d.h., dass die Abweichung der Phasenfront von der idealen Phasenfront nicht mehr als ca. ein Viertel der Laserwellenlänge beträgt.

Das vorgeschlagene Verfahren zur Laserbearbeitung eignet sich vor allem für den Materialabtrag, d. h. für die Erzeugung von Vertiefungen oder durchgängigen Öffnungen durch das Werkstück, d.h. bspw. zum Laserbohren oder Laserschneiden oder zur lokalen Oberflächenstrukturierung. Die lokale Beeinflussung erfolgt dabei derart, dass das entsprechende Material lokal mit hoher Geschwindigkeit verdampft oder anderweitig ausgetrieben wird. Grundsätzlich sind auch andere Anwendungsmöglichkeiten denkbar, bei denen das Material nicht entfernt sondern nur lokal chemisch oder physikalisch modifiziert wird.

Das Werkstück kann hierbei nur an der Oberseite, nur an der Unterseite oder sowohl an der Ober- als auch an der Unterseite eine polierte Fläche aufweisen, an der die Laserbearbeitung oder ein Teil der Laserbearbeitung erfolgen soll. Unter der Oberseite ist in der vorliegenden Patentanmeldung die Seite des Werkstücks zu verstehen, die zum einfallenden Laserstrahl hin gerichtet ist. Die Unterseite ist die der Oberseite gegenüberliegende Seite des Werkstücks. Das Hilfssubstrat wird dabei mit der jeweils zu bearbeitenden polierten Seite des Werkstücks verbunden. Im Falle einer zu bearbeitenden Ober- und Unterseite werden dann vorzugsweise zwei Hilfssubstrate eingesetzt. In Abhängigkeit von der zu bearbeitenden Seite und der gewählten Bearbeitungstechnik, d.h. direkte Laserbearbeitung von oben oder inverse Laserbearbeitung von unten, werden unterschiedliche Anforderungen an die Hilfssubstrate gestellt. Im ersten Fall muss der Laserstrahl nicht durch die Hilfssubstrate hindurchpropagieren, dann ist eine optische Qualität an der oberen Oberfläche und im Volumen nicht zwingend notwendig. Im zweiten Fall muss der Laserstrahl nahezu ungestört durch das obere Hilfssubstrat hindurchpropagieren, dass dann eine entsprechend hohe optische Qualität oder zumindest Homogenität aufweisen sollte. Vorzugsweise sind dann die optische Oberflächenqualität und Homogenität dabei so gewählt, dass der Bearbeitungslaserstrahl beim Durchtritt durch das Hilfssubstrat einen maximalen Phasenfehler erfährt, der kleiner als π/2 ist, d.h. dass die Abweichung der Phasenfront von der idealen Phasenfront nicht mehr als ca. ein Viertel der Laserwellenlänge beträgt.

Die Verbindung der polierten Substratfläche des Hilfssubstrates mit der polierten Oberfläche des Werkstücks sollte so erfolgen, dass durch diese Verbindung keine oder zumindest keine störende Beeinträchtigung der Laserbearbeitung erfolgt. Die Verbindung kann bspw. durch Ankitten oder Ankleben des Hilfssubstrates erfolgen, wobei dann eine möglichst dünne Kitt- oder Klebeschicht aus einem Kitt- oder Klebematerial gewählt wird, die durch die hindurchtretende Laserstrahlung nicht negativ beeinflusst werden, insbesondere nicht karbonisieren. In einer vorteilhaften Ausgestaltung wird das Hilfssubstrat jedoch an das Werkstück angesprengt. Dies führt zu einer im Sinne der obigen Beschreibung optimalen Verbindung des Werkstücks mit dem Hilfssubstrat über van-der-Waals-Kräfte oder durch kovalente Bindung ohne zusätzliche Zwischenschicht. Das Ablösen des Hilfssubstrates vom Werkstück wird nach der Bearbeitung bspw. durch geeignete Erwärmung zur Lösung der Kitt- oder Klebeverbindung erreicht. Beim Ansprengen erfolgt das Lösen bspw. durch thermischen Schock oder einen Keil. Die bearbeitete polierte Oberfläche wird dabei nicht geschädigt.

Zur Erzeugung eines möglichst großen Aspektverhältnisses bei einem Volumenabtrag erfolgt die Laserbearbeitung vorzugsweise mit gepulster Laserstrahlung mit Pulsdauern ≥ ca. 100 ps. So können beispielsweise gütegeschaltete und frequenzverdoppelte Oszillatoren mit einer Wellenlänge von 532 nm, einer Pulsenergie von ca. 1 mJ und einer Pulslänge von 8 ns - 30 ns, oder diodengeseedete regenerative Verstärker mit einer Wellenlänge von 1064 nm, einer Pulsenergie von ca. 100 *µ*J und einer Pulslänge von 250 ps - 1,5 ns eingesetzt werden. Durch die Verbindung mit dem Hilfssubstrat werden in diesem Fall Muschelausbrüche an der polierten Oberfläche vermieden. Das Material des Hilfssubstrates muss so gewählt sein, dass es durch die Laserstrahlung außerhalb des Laserfokus nicht modifiziert oder abgetragen wird. Vorzugsweise wird das Hilfssubstrat hierzu aus dem gleichen Material wie das Werkstück gewählt. Es ist jedoch auch möglich, ein entsprechend optisch zumindest teilweise für die Laserstrahlung transparentes Material zu wählen, das während der Bearbeitung des Werkstücks nicht auch durch die Laserstrahlung modifiziert wird. Grundsätzlich kann die Laserbearbeitung bei Wahl identischer und auch nicht identischer Materialien für Hilfssubstrat und Werkstück auch in das Hilfssubstrat hinein erfolgen, bspw. beim Laserbohren. Dies ist nicht erforderlich, vermindert jedoch auch die Bearbeitungs- und Oberflächenqualität des Werkstücks nicht.

In einer bevorzugten Ausgestaltung wird bei dem Verfahren die Technik der inversen Laserbearbeitung eingesetzt, bei dem mit einem Materialabtrag an der Unterseite des Werkstücks begonnen und der Materialabtrag in Richtung der Oberseite des Werkstücks fortgesetzt wird. Diese Technik eignet sich vor allem zur Erzeugung von durchgängigen Bohrungen in Werkstücken mit optisch polierten Oberflächen, bspw. in Substraten für Laserspiegel. Die optisch polierte Oberfläche kann dabei auf der Oberseite liegen, so dass das Hilfssubstrat hier mit der Oberseite verbunden wird. Die Laserbearbeitung erfolgt dann durch das Hilfssubstrat hindurch, beginnend mit der Unterseite des Werkstücks. Die Technik der inversen Laserbearbeitung ist bspw. in der oben bereits genannten DE 100 29 110 A1 näher beschrieben.

Das vorgeschlagene Verfahren lässt sich bei allen Arten der Laserbearbeitung einsetzen, bei denen bei der Laserbearbeitung eines Bearbeitungsbereiches Muschelausbrüche am Rand des Bearbeitungsbereiches entstehen, die unerwünscht sind. Dies gilt insbesondere beim Materialabtrag eines Volumens, an das eine optische Fläche angrenzt. Besonders vorteilhaft lässt sich das Verfahren bei der Technik der inversen Laserbearbeitung, insbesondere des inversen Laserbohrens nutzen. Selbstverständlich kann das Verfahren auch beim direkten Laserabtrag eingesetzt werden, bei dem der Laser nicht erst durch das Werkstück propagieren muss.

Beispielhafte Laseranwendungen, die ein derartig bearbeitetes Werkstück erfordern, sind Lochblenden, räumliche Filter zur Verbesserung der Strahlqualität - sowohl resonatorintern als auch resonatorextern - und die geometrische Aus- und Einkopplung von Laserstrahlung, bspw. resonatorintern erzeugter hoher Harmonischer, aus Überhöhungsresonatoren.

So findet das Verfahren beispielsweise Anwendung bei der Herstellung von kleinen Öffnungen in Spiegeln, wie sie in Anordnungen zur Erzeugung von kohärenter EUV-Strahlung durch Frequenzkonversion von Laserstrahlung bei der Trennung von Harmonischen und Fundamentaler zum Einsatz kommen können. Dabei werden Femtosekunden-Laserpulse mit hoher Pulsspitzenleistung in einen Überhöhungsresonator eingekoppelt, um eine Überhöhung, d.h. eine Steigerung der zirkulierenden Laserleistung gegenüber der einfallenden Laserleistung zu erreichen. Konversion findet in einem Gasjet statt. Die durch die Frequenzkonversion erzeugten hohen Harmonischen propagieren auf der selben Achse wie die Fundamentalmode. Eine Trennung der Harmonischen von der Fundamentalmode ist schwierig, da es für die kurzwellige Strahlung keine dichroitischen Spiegel gibt. Eine Möglichkeit besteht jedoch darin, die hohen Harmonischen mittels einer kleinen Öffnung im Spiegel geometrisch aus dem Überhöhungsresonator auszukoppeln. Muschelausbrüche an dieser Öffnung sorgen dann für Verluste sowohl für die Harmonischen als auch für die Fundamentale, die einerseits Auskoppeleffizienz und andererseits die mögliche Überhöhung des Resonators verringern. Durch das vorgeschlagene Verfahren können derartige Öffnungen im Spiegel ohne Muschelausbrüche erzeugt werden, so dass derartige Verluste beim Auskoppeln der Harmonischen vorteilhaft vermieden werden.

Auch für die Erzeugung niedriger Harmonischer ist die Trennung der Harmonischen von der Fundamentalen mit Hilfe von in Spiegel eingebrachten scharfkantigen Öffnungen vorteilhaft, die gemäß dem vorgeschlagenen Verfahren hergestellt werden.

Auch bei Frequenzkonversion im Einfachdurchgang durch ein Gas sind Spiegel mit kleinen Öffnungen ohne Muschelausbrüche vorteilhaft, wenn man den Fundamentalstrahl durch Auskopplung weiter nutzen oder z.B. auch nur dumpen möchte. Bei Muschelausbrüchen würde hier ein Teil der Leistung auf die Muschelausbrüche treffen und dadurch in alle Richtungen gelenkt werden. Auch für diese Anwendungen kann damit das vorgeschlagene Verfahren vorteilhaft eingesetzt werden.

### Kurze Beschreibung der Zeichnungen

Das vorgeschlagene Verfahren wird nachfolgend anhand eines Ausführungsbeispiels in Verbindung mit der Zeichnung nochmals näher erläutert. Hierbei zeigt:

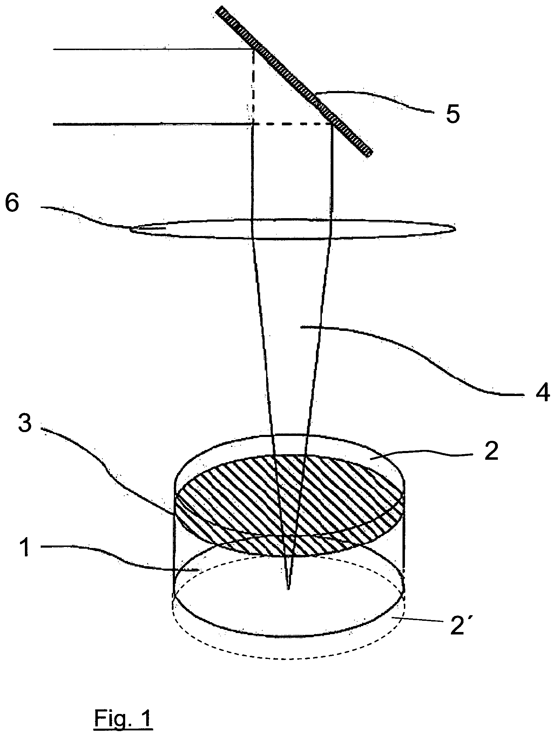

- Fig. 1: ein Beispiel für die Laserbearbeitung durch inverses Laserbohren gemäß dem vorgeschlagenen Verfahren.

### Wege zur Ausführung der Erfindung

Das vorgeschlagene Verfahren wird im Folgenden anhand der Bearbeitung eines Spiegelsubstrates für eine Laseranwendung nochmals näher erläutert. Das Spiegelsubstrat 1 besteht in diesem Beispiel aus Quarzglas und weist eine in optischer Qualität polierte Oberseite auf, die zum eintreffenden Laserstrahl 4 gerichtet ist. Der Laserstrahl 4 wird über Scannerspiegel 5 und eine F-Theta-Linse 6 in den jeweils gerade zu bearbeitenden Bereich des Spiegelsubstrats 1 gerichtet. Als Bearbeitungslaser wird in diesem Beispiel ein gütegeschalteter Festkörperlaser mit Pulsdauern im Bereich zwischen 5 und 40 ns eingesetzt. Derartige Laser sind kommerziell erhältlich. Die Laserleistung wird so gewählt, dass ein Materialabtrag jeweils nur im Fokus des Laserstrahls 4 erfolgt, außerhalb des Fokus jedoch keine Beeinträchtigung des Quarzglases des Spiegelsubstrates 1 eintritt.

Beim inversen Laserbohren beginnt die Bearbeitung an der Unterseite des Spiegelsubstrates 1, wie dies in der Figur 1 angedeutet ist. Um die gewünschte durchgängige Bohrung zu erhalten werden einzelne Schichten nahezu orthogonal zur Propagationsrichtung des Laserstrahls abgetragen. Der Fokus wird nach jeder Schicht stufenweise in Richtung der Oberseite des Spiegelsubstrates 1 verschoben. Über die Scannerspiegel 5 kann der Laserstrahl auf einer oder mehreren Bahnen im Bearbeitungsbereich geführt, durch die der Durchmesser der Bohrung festgelegt wird.

Zur Vermeidung von Muschelausbrüchen bei der Bearbeitung mit dem Laserstrahl wird an die in optischer Qualität polierte Oberseite des Spiegelsubstrats 1 ein Hilfssubstrat 2 angesprengt, das beidseitig eine optisch polierte Oberfläche aufweist. Das Hilfssubstrat 2 kann bspw. auch ein weiteres Spiegelsubstrat sein. Auch an die Unterseite kann ein entsprechendes Hilfssubstrat 2' angesprengt sein, falls die Unterseite ebenfalls frei von Muschelausbrüchen erzeugt werden soll. Dieses weitere Hilfssubstrat 2' ist in der Figur gestrichelt angedeutet.

Grundsätzlich ist beim inversen Laserbohren entscheidend, dass der Laserstrahl nicht nennenswert an Strahlqualität bei der Propagation zur jeweiligen Bearbeitungsebene verliert. Der Phasenfehler, den das Hilfssubstrat 2 und die Trennfläche 3 zwischen Hilfssubstrat 2 und Spiegelsubstrat 1 dem Laserstrahl 4 aufprägt, sollte dabei kleiner als ungefähr π/2 sein, d.h. die Abweichung von der idealen Wellenfront sollte nicht mehr als 1/4 der Wellenlänge des Laserstrahls betragen. Hierbei sollte vor allem die Trennfläche 3 zwischen Hilfssubstrat 2 und Spiegelsubstrat 1, die einen Schutz für die zu bearbeitende optische Oberfläche des Spiegelsubstrats 1 darstellt, einen geringstmöglichen Einfluss haben. Dies wird durch das Ansprengen gewährleistet. Dadurch ist diese Trennfläche 3 für den Laserstrahl 4 quasi nicht existent.

Durch das Ansprengen des Hilfssubstrates 2 wird die Spiegeloberfläche an der Bearbeitungskante nicht zerstört, so dass beim späteren Einsatz des Spiegelsubstrates 1 zur geometrischen Trennung zweier Laserstrahlen keine zusätzlichen Verluste auftreten. Das Hilfssubstrat 2 wird nach der Bearbeitung vom Spiegelsubstrat 1 getrennt.

Auch wenn im vorangegangenen Beispiel das Verfahren anhand der Technik des inversen Laserbohrens erläutert wurde, so kann ein derartiges Spiegelsubstrat bspw. auch durch direkten Laserabtrag mit der gewünschten Bohrung versehen werden. Dabei beginnt der Laserabtrag an der Oberseite und der Fokus des Laserstrahls wird stufenweise zur Unterseite des Substrats verschoben.

Weiterhin ist es nicht erforderlich, dass das Hilfssubstrat die gleichen lateralen Dimensionen, wie das Werkstück - bzw. im vorangegangenen Beispiel das Spiegelsubstrat - aufweist. Das Hilfssubstrat kann auch größere oder kleinere laterale Dimensionen aufweisen, solange der zu bearbeitende Bereich durch das Hilfssubstrat abgedeckt ist, wobei die Ausdehnung des Laserstrahls bei der Propagation durch das Hilfssubstrat mit berücksichtigt werden muss. Das Hilfssubstrat muss eine ausreichend große Dicke aufweisen, um die mindestens eine polierte Substratfläche durch ein entsprechendes Polierverfahren erzeugen zu können. Im vorangegangenen Beispiel weist das Hilfssubstrat eine Dicke von etwa 3 mm auf.

### Bezugszeichenliste

- 1: Spiegelsubstrat bzw. Werkstück
- 2,2': Hilfssubstrat
- 3: Trennfläche
- 4: Laserstrahl
- 5: Scannerspiegel
- 6: Fokussierlinse

## Patentansprüche

1. Verfahren zur Laserbearbeitung eines Werkstücks (1) aus einem dielektrischen Material, das mindestens eine polierte Oberfläche aufweist,
bei dem das Material mit einem Laserstrahl (4) zumindest an der polierten Oberfläche lokal beeinflusst wird, um einen Materialabtrag oder eine physikalische oder chemische Modifikation des Materials zu erreichen,
**dadurch gekennzeichnet**
**dass** die mindestens eine polierte Oberfläche vor der Bearbeitung mit einer polierten Substratfläche eines Hilfssubstrates (2) verbunden wird, das für den Laserstrahl (4) zumindest teilweise transparent ist und nach der Bearbeitung wieder vom Werkstück (1) abgelöst wird.

2. Verfahren nach Anspruch 1,
**dadurch gekennzeichnet,**
**dass** das Hilfssubstrat (2) mit der polierten Substratfläche an die mindestens eine polierte Oberfläche des Werkstücks (1) angesprengt wird.

3. Verfahren nach Anspruch 1 oder 2,
**dadurch gekennzeichnet,**
**dass** bei der Bearbeitung eines Werkstückes (1) mit einer in optischer Qualität polierten Oberfläche ein Hilfssubstrat (2) eingesetzt wird, bei dem die polierte Substratfläche ebenfalls in optischer Qualität poliert ist.

4. Verfahren nach Anspruch 3,
**dadurch gekennzeichnet,**
**dass** Oberflächenqualität und Homogenität des Hilfssubstrates (2) so gewählt werden, dass dem Laserstrahl (4) beim Durchtritt durch das Hilfssubstrat (2) höchstens ein Phasenfehler eingeprägt wird, der kleiner als ungefähr π/2 ist.

5. Verfahren nach einem der Ansprüche 1 bis 4,
**dadurch gekennzeichnet,**
**dass** mit dem Laserstrahl (4) eine durchgängige Öffnung, insbesondere Bohrung, im Werkstück (1) erzeugt wird.

6. Verfahren nach Anspruch 5,
**dadurch gekennzeichnet,**
**dass** der Laserstrahl (4) zunächst über eine der polierten Oberfläche gegenüberliegende Seite durch das Werkstück (1) hindurch auf die polierte Oberfläche fokussiert wird, um die Bearbeitung, insbesondere einen Materialabtrag, an der polierten Oberfläche zu beginnen und durch das Werkstück (1) hindurch bis zur gegenüberliegenden Seite fortzuführen.

7. Verfahren nach Anspruch 5,
**dadurch gekennzeichnet,**
**dass** der Laserstrahl (4) zunächst durch das Hilfssubstrat (2) und das Werkstück (1) hindurch auf eine der polierten Oberfläche gegenüberliegende Seite fokussiert wird, um die Bearbeitung, insbesondere einen Materialabtrag, an der gegenüberliegenden Seite zu beginnen und durch das Werkstück (1) hindurch bis zur polierten Oberfläche fortzuführen.

8. Verfahren nach einem der Ansprüche 1 bis 7,
**dadurch gekennzeichnet,**
**dass** die Bearbeitung mit gepulster Laserstrahlung mit Pulsdauern ≥ 100ps erfolgt.

9. Verfahren nach einem der Ansprüche 1 bis 8,
**dadurch gekennzeichnet,**
**dass** das Hilfssubstrat (2) aus dem gleichen Material gewählt wird wie das Werkstück (1).

10. Verwendung des Verfahrens nach einem der Ansprüche 1 bis 9 für die Herstellung von Öffnungen in Laserspiegeln, die zur Trennung von Harmonischen und Fundamentaler eingesetzt werden.

## Claims

1. Method for the laser machining of a workpiece (1) that is made of a dielectric material and has at least one polished surface, in which the material is locally influenced at least on the polished surface by means of a laser beam (4) in order to achieve a material removal or a physical or chemical modification of the material, **characterised in that**
before the machining the at least one polished surface is connected to a polished substrate surface of an auxiliary substrate (2), which auxiliary substrate is at least partially transparent to the laser beam (4) and is removed from the workpiece (1) again after machining.

2. Method according to claim 1,
**characterised in that**
the auxiliary substrate (2) with the polished substrate surface is optically contact bonded to the at least one polished surface of the workpiece (1).

3. Method according to claim 1 or 2,
**characterised in that**
during machining of a workpiece (1) having a polished surface of optical quality, an auxiliary substrate (2) is used in which the polished substrate surface is also polished to optical quality.

4. Method according to claim 3,
**characterised in that**
the surface quality and homogeneity of the auxiliary substrate (2) are chosen such that a phase error smaller than about n/2 is introduced into the laser beam (4) when it passes through the auxiliary substrate (2).

5. Method according to any one of claims 1 to 4, **characterised in that**
a continuous opening, particularly a borehole, is created in the workpiece (1) by the laser beam (4).

6. Method according to claim 5,
**characterised in that**
the laser beam (4) is first focused on the polished surface through the workpiece (1) via a side opposite the polished surface in order to begin the machining, particularly material removal, on the polished surface and to continue the machining through the workpiece (1) as far as the opposite side.

7. Method according to claim 5,
**characterised in that**
the laser beam (4) is first focused on a side opposite the polished surface through the auxiliary substrate (2) and the workpiece (1) in order to begin the machining, particularly material removal, on the opposite side, and to continue the machining through the workpiece (1) as far as the polished surface.

8. Method according to any one of claims 1 to 7, **characterised in that**
the machining is carried out with pulsed laser radiation with pulse duration ≥ 100 ps.

9. Method according to any one of claims 1 to 8, **characterised in that**
the auxiliary substrate (2) is chosen from the same material as the workpiece (1).

10. Use of the method according to any one of claims 1 to 9 to create openings in laser mirrors that are used to separate harmonics and fundamental.

## Revendications

1. Procédé d'usinage au laser d'une pièce à usiner (1) constituée d'un matériau diélectrique, qui présente au moins une surface polie, dans lequel le matériau est influencé localement avec un rayon laser (4) au moins sur la surface polie, afin d'obtenir un enlèvement du matériau ou une modification physique ou chimique du matériau,
**caractérisé en ce que**
au moins une surface polie est reliée avant l'usinage avec une surface de substrat polie d'un substrat auxiliaire (2), qui est au moins partiellement transparente au rayon laser (4) et est de nouveau décollée de la pièce à usiner (1) après l'usinage.

2. Procédé selon la revendication 1,
caractérisé en en que
le substrat auxiliaire (2) est accolé avec la surface de substrat polie sur au moins une surface polie du substrat (1).

3. Procédé selon la revendication 1 ou 2,
**caractérisé en ce que**
lors de l'usinage d'une pièce à usiner (1) avec une surface polie à qualité optique, un substrat auxiliaire (2) est employé, dans lequel la surface de substrat polie est également polie à qualité optique.

4. Procédé selon la revendication 3,
**caractérisé en ce que**
la qualité de surface et l'homogénéité du substrat auxiliaire (2) sont sélectionnés de telle sorte que le rayon laser (4) soit exposé au maximum à une erreur de phase lors du passage à travers le substrat auxiliaire (2), qui est inférieure à approximativement n/2.

5. Procédé selon une des revendications 1 à 4, **caractérisé en ce que**
avec le rayon laser (4) une ouverture traversante, notamment un alésage, est produite dans la pièce à usiner (1).

6. Procédé selon la revendication 5,
**caractérisé en ce que**
le rayon laser (4) est focalisé dans un premier temps sur un côté opposé à la surface polie à travers la pièce à usiner (1) sur la surface polie, afin de commencer l'usinage, notamment un enlèvement de matériau, sur la surface polie et continuer jusqu'au côté opposé à travers la pièce à usiner (1).

7. Procédé selon la revendication 5,
**caractérisé en ce que**
le rayon laser (4) est focalisé dans un premier temps à travers le substrat auxiliaire (2) et la pièce à usiner (1) sur un côté opposé à la surface polie, afin de commencer l'usinage, notamment un enlèvement de matériau, sur la surface polie et continuer jusqu'au côté opposé à travers la pièce à usiner (1).

8. Procédé selon une des revendications 1 à 7, **caractérisé en ce que**
l'usinage est effectué avec un rayonnement laser impulsé avec des durées d'impulsion ≥ 100ps.

9. Procédé selon une des revendications 1 à 9, **caractérisé en ce que**
le substrat auxiliaire (2) est sélectionné dans le même matériau que la pièce à usiner (1).

10. Utilisation du procédé selon une des revendications 1 à 9 pour la production d'ouvertures dans des miroirs de laser, qui est utilisé pour séparer les ondes harmoniques et les ondes fondamentales.
